# FASCICULE DE BREVET EUROPEEN

(11) **EP 3 549 047 B1**
(45) Date de publication et mention de la délivrance du brevet: **25.11.2020**
(21) Numéro de dépôt: 17800904.9
(22) Date de dépôt: 19.10.2017
(51) Int. Cl.: G06F 21/44, H04L 29/06

(54) **PROCEDE D'AUTHENTIFICATION D'UN EQUIPEMENT TERMINAL, DISPOSITIF, EQUIPEMENT SERVEUR ET PROGRAMME D'ORDINATEUR ASSOCIES**
VERFAHREN ZUR AUTHENTIFIZIERUNG EINER ENDGERÄTEVORRICHTUNG, ZUGEHÖRIGE VORRICHTUNG, SERVERVORRICHTUNG UND COMPUTERPROGRAMM
METHOD FOR AUTHENTICATING A TERMINAL APPARATUS, ASSOCIATED DEVICE, SERVER APPARATUS AND COMPUTER PROGRAM

(30) Priorité: 05.12.2016 FR 1661903
(43) Date de publication de la demande: 09.10.2019
(73) Titulaire: B<>COM, 35510 Cesson-Sévigné (FR)
(72) Inventeur: LE GUELVOUIT, Gaëtan, 35235 Thorigne-Fouillard (FR); GAREL, Alexandre, 44240 LA CHAPELLE SUR ERDRE (FR)
(74) Mandataire: Ermeneux, Bertrand
(86) Numéro de dépôt international: PCT/FR2017/052875
(87) Numéro de publication internationale: WO 2018/104599

(56) Documents cités:
- GB-A- 2 485 241
- US-A1- 2016 155 128
- FURKAN ALACA ET AL: "Device fingerprinting for augmenting web authentication : classification and analysis of methods", DRAFT SUBMITTED AT ACSAC 2016, 9 novembre 2016 (2016-11-09), XP055377372, http://people.scs.carleton.ca/~paulv/paper s/acsac2016-device-fingerprinting.pdf
- ELIE BURSZTEIN ET AL: "Picasso", SECURITY AND PRIVACY IN SMARTPHONES AND MOBILE DEVICES, ACM, 2 PENN PLAZA, SUITE 701 NEW YORK NY 10121-0701 USA, 24 octobre 2016 (2016-10-24), pages 93-102, XP058300274, DOI: 10.1145/2994459.2994467 ISBN: 978-1-4503-4564-4

## Description

### 1. Domaine de l'invention

Le domaine de l'invention est celui du contrôle d'accès à un service distant hébergé par un équipement serveur d'un réseau de télécommunications.

L'invention peut notamment, mais non exclusivement, s'appliquer à l'authentification d'un équipement terminal d'un utilisateur qui souhaite accéder à un tel service.

### 2. Présentation de l'art antérieur

On connait du document de K. Mowery et al, intitulé « Pixel Perfect : Fingerprinting Canvas in HTML 5 », publié dans « Proceedings of the Workshop on Web 2.0 Security and Privacy (W2SP) » le 24 mai 2012, un système de génération d'empreintes d'un navigateur web d'un équipement terminal, basé sur le résultat d'exécution de commandes de rendu de motif par ce navigateur. Une telle commande est programmable et spécifie les caractéristiques d'un motif qui peut être graphique ou audiovisuel, dont le rendu caractérise de façon unique le navigateur qui l'a exécuté. Le motif en question est par exemple reproduit à l'intérieur d'une surface de dessin. Avantageusement, un composant « script » du langage de balisage HTML permet de traduire cette commande sous forme de programme ou script. L'exécution de ce script par le navigateur le conduit à produire une image comprenant le rendu du motif. L'image résultante peut être insérée dans une balise de type « canvas » du langage de balisage HTML. Le document évoque la possibilité pour un service bancaire distant d'exploiter l'empreinte constituée par le rendu de motif produit par le navigateur web de l'équipement client pour renforcer son contrôle d'accès, en déclenchant une authentification supplémentaire lorsque le rendu de motif produit par le navigateur ne correspond pas à celui précédemment stocké en mémoire.

Un avantage de cette méthode est d'accroître la résistance aux tentatives d'authentification illégitimes. En effet, elle crée un type de donnée d'authentification supplémentaire qu'un attaquant doit récupérer avant de pouvoir usurper l'identité de l'utilisateur.

### 3. Inconvénients de l'art antérieur

Un inconvénient de cette méthode est qu'elle n'est plus efficace dès lors qu'un attaquant a réussi à intercepter la commande d'exécution de rendu de motif et le rendu de motif produit par le navigateur client.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution qui améliore la sécurité sans préjudice pour l'utilisateur. La présente invention est définie par les revendications indépendantes.

### 5. Exposé de l'invention

Ces objectifs, ainsi que d'autres qui apparaîtront par la suite, sont atteints à l'aide d'un procédé d'authentification d'un utilisateur d'un équipement terminal connecté à un réseau de communication, pour l'accès depuis cet équipement terminal à un service distant hébergé par un équipement serveur connecté audit réseau, ledit procédé comprenant les étapes suivantes, destinées à être mises en œuvre par l'équipement serveur :
- authentification de l'utilisateur à partir d'informations d'identification;
- en cas d'authentification réussie de l'utilisateur, authentification de l'équipement client à partir d'informations d'authentification stockées dans une première mémoire de l'équipement serveur en association avec les informations d'identification de l'utilisateur, comprenant une commande d'exécution de rendu d'un premier motif dont les valeurs sont sélectionnées aléatoirement parmi une pluralité de valeurs prédéterminées, ladite commande comprenant des paramètres de description du premier motif, et un rendu du premier motif reçu de l'équipement client, dit motif de référence, ladite authentification comprenant les sous-étapes suivantes :
   o envoi à l'équipement client de la commande d'exécution de rendu du premier motif;
   o sur réception d'une réponse comprenant un rendu du premier motif par l'équipement client, comparaison au rendu de référence et évaluation d'un score de correspondance;
- décision d'authentification de l'équipement client en fonction du score évalué, une authentification réussie étant décidée lorsque le score de correspondance est supérieur à un seuil prédéterminé ; suite à la décision d'authentification, le procédé comprend une étape de mise à jour des informations d'authentification de l'équipement terminal, ladite étape comprenant, suite à une authentification échouée, une suppression de la commande d'exécution de rendu du premier motif et du rendu de premier motif de la première mémoire et, en cas d'authentification réussie de l'équipement client, un remplacement de la commande de rendu du premier motif et du rendu de référence stockés dans la première mémoire, par une commande d'exécution de rendu d'un deuxième motif par une commande d'exécution de rendu d'un deuxième motif, distinct du premier et dont les valeurs de paramètres sont sélectionnées aléatoirement parmi une pluralité de valeurs prédéterminées, et un rendu de deuxième motif.

L'invention exploite, pour l'authentification de l'équipement client de l'utilisateur des commandes de rendu de motif paramétrables, dont le résultat est propre à identifier de façon unique l'équipement client qui l'a lui-même généré.

Le principe de l'invention consiste à modifier les données d'authentification du navigateur client, à savoir la commande d'exécution de rendu du motif de référence et le rendu du motif de référence produit par le client, dès lors qu'elles ont été exploitées pour une demande d'authentification.

De cette manière, si un attaquant est parvenu à intercepter une réponse comprenant le premier rendu de motif produit par l'équipement client, il ne peut pas s'en servir pour usurper l'identité de l'utilisateur, du fait que ce premier rendu n'est pas réutilisé lors des prochaines authentifications, que l'authentification ait été un succès ou un échec. Le niveau de sécurité est donc accru.

Contrairement aux empreintes communément utilisées pour authentifier un équipement utilisateur, que l'on construit à partir d'éléments de configuration matérielle et logicielle, par nature relativement figés, les commandes d'exécution de rendu de motifs dans un client de l'équipement terminal offrent des possibilités de renouvellement du rendu quasiment illimitées qui sont particulièrement bien adaptées au fonctionnement dynamique proposé par l'invention.

L'invention s'appuie donc sur une approche tout-à-fait nouvelle et inventive de l'authentification qui consiste à profiter de cette possibilité de production dynamique de nouvelles données d'authentification par le client, pour leur réserver un usage unique.

Avec l'invention, une authentification réussie de l'équipement client par exécution de motif déclenche systématiquement un remplacement du couple de données d'authentification, commande d'exécution de rendu de motif de référence et rendu de motif de référence par le client, stocké en mémoire, par un nouveau couple.

Du fait que l'exécution de cette commande de motif étant réalisée par le client de l'équipement utilisateur de façon transparente pour l'utilisateur, on comprend que cette mise à jour systématique des données d'authentification de l'équipement terminal n'est pas contraignante pour lui.

Avec l'invention, suite à une authentification échouée, la mise à jour des informations d'authentification du client comprend une suppression de la commande d'exécution de rendu du premier motif et du rendu de premier motif de la première mémoire.

Que le compte de l'utilisateur ait fait l'objet d'une attaque ou bien que l'utilisateur ait tenté de se connecter avec un nouvel équipement terminal, les données d'authentification ont été utilisées lors de la dernière tentative de connexion. Elles sont donc supprimées. Après cette opération, l'utilisateur ne dispose plus de données d'authentification valides pour l'équipement client enregistré.

Selon l'invention, , une commande d'exécution de rendu d'un motif, est générée à partir d'une sélection aléatoire des valeurs des paramètres de description du motif parmi une pluralité de valeurs prédéterminées.

Il s'avère qu'un motif peut être spécifié par plus de 40 paramètres différents. Chaque paramètre peut prendre en moyenne plusieurs centaines de valeurs différentes. Il y a donc une infinité de possibilités (1.e⁸⁰ pour une moyenne de 100 valeurs par paramètre). On est donc garanti de ne pas redemander le même rendu de motif au client.

Selon un autre aspect de l'invention, en cas d'authentification réussie, l'étape de mise à jour comprend une sous-étape d'obtention du rendu de deuxième motif par le client par lecture dans une deuxième mémoire de l'équipement serveur de la commande d'exécution de deuxième rendu.

La commande d'exécution de rendu du deuxième motif a été émise au préalable par exemple lors de l'enregistrement ou première authentification de l'utilisateur et de son client au service distant. Dans ce cas le serveur a émis simultanément plusieurs commandes d'exécution de rendu de motifs distincts au client de l'utilisateur et a stocké les résultats en vue d'un usage ultérieur. Il a ainsi profité du caractère sûr de la première connexion du client pour se pré-constituer un stock de données d'authentification lui permettant de réaliser plusieurs authentifications successives de ce client.

Avantageusement, le couple de deuxièmes données d'authentification est supprimé de la deuxième mémoire de façon à ne pas pouvoir resservir à une authentification ultérieure.

Selon encore un autre aspect de l'invention, l'étape de mise à jour comprend suite à l'authentification réussie, une sous-étape d'obtention du rendu de deuxième motif par le client par émission, de la commande d'exécution de rendu du deuxième motif, et réception d'une réponse comprenant un rendu du deuxième motif par le client.

L'authentification réussie déclenche l'obtention de nouvelles données d'authentification en vue d'une prochaine demande de connexion du client. Un premier avantage est d'obtenir les données au fur et à mesure des besoins et donc d'économiser les ressources de stockage côté serveur. Un deuxième avantage est que cette production de nouvelles données d'authentification est réalisée en cas d'authentification réussie du couple utilisateur donc dans des conditions de sécurité satisfaisantes.

Avantageusement, l'émission de la commande d'exécution de rendu du deuxième motif est déclenchée lorsque la deuxième mémoire ne comprend pas de rendu de deuxième motif, distinct du premier.

Un avantage est que le serveur ne commande l'exécution d'un nouveau motif que lorsqu'il a épuisé ses réserves.

Selon un aspect de l'invention, la commande d'exécution d'un rendu de premier ou de deuxième motif est une commande appartenant à un groupe comprenant au moins :
- une commande de type « canvas » destinée à produire un motif graphique dans un cadre rectangulaire de taille prédéterminée ;
- une commande de type contexte audio, comprenant des paramètres de description d'un signal audio et destinée à générer un rendu audio.
- une commande de type « getClientRects », destinée à générer une pluralité de rectangles correspondant aux limites de lignes de texte d'un élément HTML.

La commande de canvas définit une surface de dessin pilotable en JavaScript spécifique au format HTML. Le rendu du canvas peut être de deux types, à savoir contexte « 2d » ou contexte « webGI ». Il dépend de nombreux paramètres de configuration de l'équipement terminal, tels que les polices de caractères installées, les systèmes d'exploitation, le type d'anti-crénelage, la carte graphique etc. Il est très discriminant d'un terminal à l'autre.

Les commandes de type contexte audio définissent un ou plusieurs signaux audio à reproduire par l'équipement d'un utilisateur. Ces signaux audio sont pilotables en JavaScript (amplitude, fréquence, type, ...) et peuvent subir plusieurs transformations à travers différents modules audio tels que des filtres (BiquadFilterNode), des compresseurs (DynamicsCompressorNode), des modules d'analyses fréquentielles (AnalyserNode), ou autres. Le rendu audio dépend de nombreux paramètres de configuration de l'équipement terminal, tels que le système d'exploitation, le navigateur internet, la carte son (ou carte-mère), etc. Le rendu est très discriminant d'un terminal à l'autre.

Les commandes de type « getClientRects » capturent les limites d'un élément HTML, par exemple un élément de type « span », et les transforment en collections de rectangles. Ces commandes sont pilotables en Javascript dans le sens ou le client peut définir le contenu de l'élément HTML à dimensionner. Les dimensions de ces rectangles dépendent de nombreux paramètres de configuration de l'équipement terminal, tels que le système d'exploitation, le navigateur internet, la carte graphique, etc. Les dimensions obtenues sont très discriminantes d'un terminal à l'autre.

Selon encore un autre aspect de l'invention, suite à une authentification échouée, le procédé comprend une étape d'émission d'une requête d'authentification supplémentaire à destination de l'équipement client identifié, et, en cas de résultat positif, une création de nouvelles données d'authentification associées à un deuxième équipement client, comprenant une étape d'émission d'une commande d'exécution de rendu d'un troisième motif et d'un rendu de troisième motif par le deuxième équipement client et une étape de stockage de données d'authentification, associant à un identifiant du deuxième équipement client, ladite commande de rendu de troisième motif et ledit rendu.

On est dans le cas où l'utilisateur a confirmé qu'il était bien celui qui avait tenté de se connecter. Cela signifie qu'il a utilisé un deuxième équipement client, qui n'est pas encore connu de l'équipement serveur et qu'il convient d'enregistrer.

Avantageusement, suite à une authentification supplémentaire réussie, le procédé comprend en outre une étape de mise à jour des données d'authentification du premier équipement client comprenant une sous-étape d'obtention d'une commande de rendu d'un deuxième motif et d'un rendu de deuxième motif par le premier équipement client par lecture dans une deuxième mémoire de l'équipement serveur.

Les données d'authentification du premier équipement terminal ayant été supprimées, il convient de les remplacer.

Selon un autre aspect de l'invention, le procédé comprend une phase préalable d'enregistrement de l'utilisateur et du premier équipement client, comprenant une étape d'émission d'au moins une commande d'exécution d'un premier motif et, sur réception d'un rendu de premier motif par l'équipement client, une étape de stockage de la commande et du rendu comme données d'authentification de l'équipement client dans la première mémoire en association avec un identifiant de l'utilisateur et un identifiant du premier équipement client.

Selon encore un autre aspect de l'invention, l'étape d'émission de la commande d'exécution d'un premier motif est répétée au moins une fois et la phase d'enregistrement comprend une étape de comparaison des rendus de premier motif obtenus, l'étape de stockage étant déclenchée lorsque les rendus sont identiques.

Un avantage est de ne stocker que des rendus stables et reproductibles dans le temps ce qui permet de garantir une authentification fiable et d'éviter les fausses alarmes.

Selon encore un autre aspect de l'invention, l'étape d'émission comprend au moins une commande d'exécution d'un deuxième motif et ladite commande et le rendu de deuxième motif obtenu sont stockés dans une deuxième mémoire.

Plusieurs commandes sont émises simultanément. Un avantage est de constituer une réserve de données d'authentification du premier équipement client, de façon à pouvoir réaliser facilement la mise à jour selon l'invention.

Selon un autre aspect de l'invention, avant l'émission de la commande de rendu de premier motif au premier équipement client, le procédé comprend une étape de vérification d'un état associé à ladite commande, l'émission de la commande n'est déclenchée que pour un état mis à une valeur « utilisable » et, suite à l'émission de ladite commande, le procédé comprend une étape de changement dudit état, la valeur « utilisable » étant remplacée par une valeur « utilisée ».

Un avantage est qu'en cas de tentative d'authentification non aboutie par un utilisateur malveillant, qui est stoppée avant la prise de décision et donc la mise à jour des données d'authentification, le couple de données d'authentification est marqué comme déjà utilisé et ne sera pas réémis. Lors d'une authentification suivante, l'équipement serveur pourra recourir, le cas échéant, à un couple de données d'authentification de réserve ou bien demander à l'utilisateur un paramètre d'authentification supplémentaire puis, en cas de succès, émettre une nouvelle commande de rendu de motif à destination de l'équipement client.

Les différents modes ou caractéristiques de réalisation mentionnés ci-après peuvent être ajoutés indépendamment ou en combinaison les uns avec les autres, aux caractéristiques du procédé d'authentification défini ci-dessus.

L'invention concerne également un dispositif d'authentification adapté pour mettre en œuvre le procédé d'authentification selon l'un des modes particuliers de réalisation définis ci-dessus. Ce dispositif pourra bien sûr comporter les différentes caractéristiques relatives au procédé d'authentification selon l'invention. Ainsi, les caractéristiques et avantages de ce dispositif sont les mêmes que ceux du procédé, et ne sont pas détaillés plus amplement.

Corrélativement, l'invention concerne aussi un équipement serveur comprenant un module d'émission/réception de données vers et en provenance d'un réseau de télécommunications, un module de traitement apte à exécuter un service distant et un dispositif d'authentification d'un équipement terminal d'un utilisateur souhaitant accéder au service selon l'invention.

L'invention concerne encore un programme d'ordinateur comportant des instructions pour la mise en œuvre des étapes d'un procédé tel que décrit précédemment, lorsque ce programme est exécuté par un processeur.

Ce programme peut utiliser n'importe quel langage de programmation. Il peut être téléchargé depuis un réseau de communication et/ou enregistré sur un support lisible par ordinateur.

L'invention se rapporte enfin à un support d'enregistrement, lisible par un processeur, intégrés ou non au dispositif d'authentification selon l'invention, éventuellement amovible, mémorisant respectivement un programme d'ordinateur mettant en œuvre un procédé d'authentification, tel que décrit précédemment.

### 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- les figures **1A et 1B** (déjà décrites) présentent des exemples de rendus de motifs de type « canvas » ;
- la figure **2** présente de façon schématique un premier et un deuxième équipement terminal d'un utilisateur qui souhaite se connecter à un service distant hébergé par un équipement serveur ;
- la figure **3** présente de façon schématique les étapes d'un procédé d'authentification d'un utilisateur d'un équipement terminal par un équipement serveur selon un mode de réalisation de l'invention ;
- la Figure **4** présente de façon schématique un exemple de page d'accueil pour l'accès au service hébergé par le serveur ;
- les figures **5A** à **5E** présentent des exemples de tables d'enregistrement de données d'authentification de l'utilisateur et d'au moins un équipement terminal de cet utilisateur par l'équipement serveur pour le contrôle d'accès au service distant, selon un mode de réalisation de l'invention ;
- la figure **6** présente de façon schématique un diagramme de flux des messages échangés entre l'équipement serveur et l'équipement terminal d'un utilisateur ; et
- la figure **7** présente de façon schématique la structure matérielle d'un dispositif d'authentification d'un utilisateur selon un mode de réalisation de l'invention.

### 7. Description d'un mode de réalisation particulier de l'invention

Le principe général de l'invention repose sur l'utilisation du résultat de l'exécution d'une commande de rendu de motif paramétrable comme donnée d'authentification d'un équipement terminal d'un utilisateur et sur la mise à jour de cette donnée après chaque nouvelle tentative d'authentification.

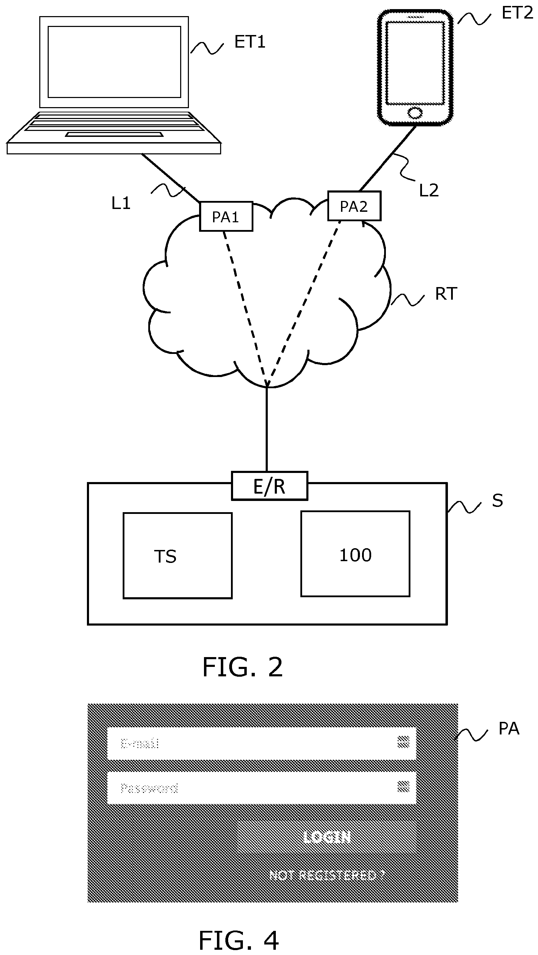

En relation avec la Figure **2**, on considère un utilisateur UT d'un premier équipement terminal ET1, par exemple un terminal mobile de type « smartphone » (pour « téléphone intelligent », en anglais) ou une tablette ou encore un ordinateur personnel (pour « personal computer », en anglais), qui souhaite accéder à un service distant Sv hébergé par un équipement serveur S connecté à un réseau de communications R. Le premier équipement terminal ET1 est apte à se connecter à un point d'accès PA1 du réseau de communication R, via un lien L1 filaire ou un lien radio courte portée, par exemple selon une technologie de type Wifi ou via un lien d'accès radio à un point d'accès telle qu'une station de base (« node-B » pour 3G, « e-node B » pour 4G, en anglais) de type 3G, 4G ou d'une future génération de la norme 3GPP.

On suppose que l'utilisateur dispose d'un deuxième équipement terminal ET2 depuis lequel il accède à un point d'accès PA2 du réseau R par un lien L2 et peut demander à accéder au même service.

Par exemple, on considère une situation classique d'un premier équipement terminal mobile qui permet à l'utilisateur de se connecter au service pendant ses déplacements et d'un deuxième équipement terminal fixe qu'il utilise depuis son domicile ou son bureau.

Le service en question peut être par exemple un service de gestion d'un compte bancaire ou tout autre service professionnel ou privé, pourvu que la connexion de l'utilisateur à son compte soit soumise à un contrôle d'accès.

Dans la suite, on considère que l'utilisateur accède au service considéré par l'intermédiaire d'un navigateur web, à l'intérieur duquel il accède à une page web de contrôle d'accès au service. Bien sûr l'invention ne se limite pas à cet exemple. Le service peut aussi bien être accessible par le lancement d'un logiciel applicatif, par exemple de type application mobile, pouvant établir une connexion au service distant Sv.

Par exemple, l'équipement client communique avec l'équipement serveur via un protocole de communication tel que le protocole de transfert hypertexte (pour « HyperText Transfer Protocol », en anglais), communément utilisé pour le système hypertexte public fonctionnant sur Internet (pour « World Wide Web », en anglais) et permettant de consulter, avec un navigateur, des pages accessibles sur des sites Web. HTTP est un protocole de la couche application de la pile OSI. Il peut fonctionner sur n'importe quelle connexion fiable, dans les faits on utilise le protocole TCP (pour « Transmission Control Protocol », en anglais) comme couche de transport. Un serveur HTTP utilise alors par défaut le port 80 (443 pour HTTPS). Bien entendu l'invention ne se limite pas à ce protocole et pourrait recourir à d'autres protocoles de communication.

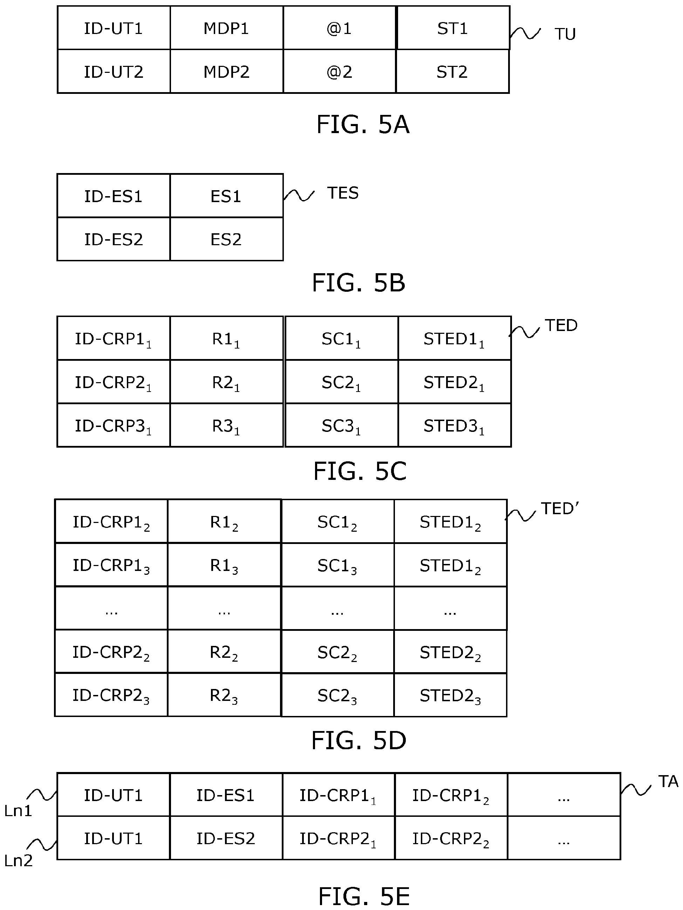

L'équipement serveur S selon l'invention comprend un module de connexion E/R au réseau R, par l'intermédiaire duquel il peut communiquer avec un des équipements terminaux de l'utilisateur, un dispositif 100 d'authentification qui sera décrit plus en détails ci-après en relation avec la Figure 5 et au moins une mémoire M. Il comprend aussi un module TS de traitement, apte à rendre le service distant.

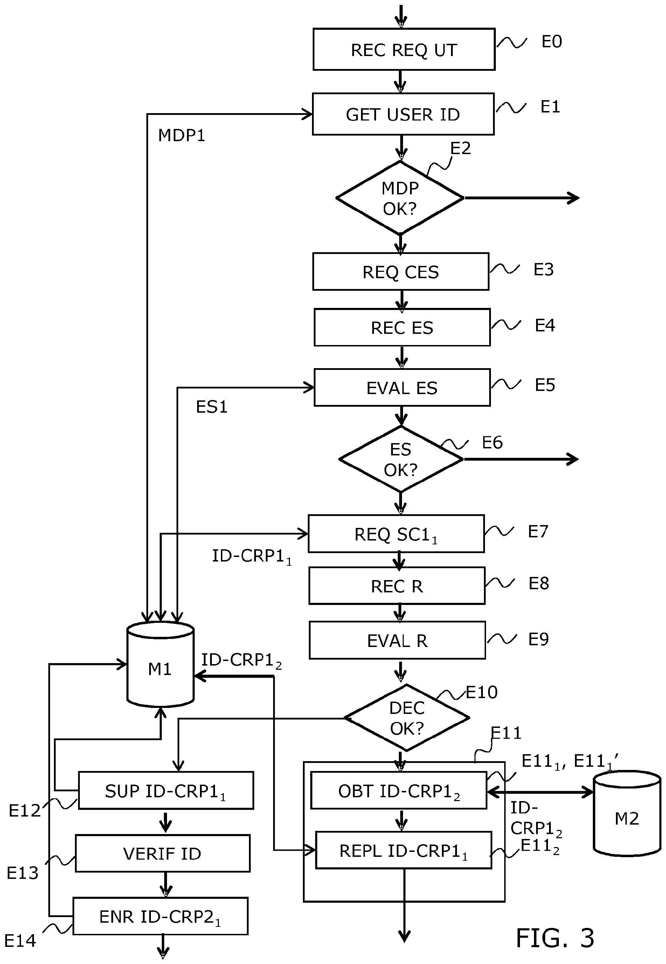

En relation avec la Figure **3****,** on décrit maintenant les étapes d'un procédé d'authentification de cet utilisateur par l'équipement serveur S qui héberge le service Sv.

Au cours d'une étape E0, l'équipement serveur S reçoit une demande de connexion au service Sv en provenance du premier équipement terminal ET1 de l'utilisateur UT. Typiquement, elle prend la forme d'une requête http de type GET spécifiant l'adresse ou URL (pour « Uniform Resource Locator », en anglais) du site Web du service distant.

En E1, il obtient au moins un identifiant ID-UT de l'utilisateur UT. Il s'agit par exemple d'une adresse Email ou du nom de l'utilisateur ou d'une séquence de caractères alphanumériques choisie par l'utilisateur ou par l'équipement serveur et associée à l'utilisateur UT. En relation avec la Figure **4****,** on a représenté un exemple de page d'accueil sur laquelle l'utilisateur est invité à saisir son identifiant et le mot de passe qui lui est associé.

On suppose donc que l'utilisateur UT s'est préalablement enregistré au service. De façon connue, cet enregistrement est généralement réalisé lors d'une première demande de connexion au service. L'équipement serveur demande à l'utilisateur de choisir un identifiant ID-UT et un mot de passe MDP associé. Avantageusement, le procédé réalise une authentification de l'utilisateur, selon une technique connue en soi, à partir de cet identifiant basé sur la fourniture d'un mot de passe et la comparaison de ce mot de passe fourni à un mot de passe de référence MDP1 stocké en mémoire, par exemple dans une table d'utilisateurs TU d'une mémoire M1. En relation avec la Figure **5A****,** une telle table comprend avantageusement, pour cet utilisateur UT une ligne ou un enregistrement comprenant ces données d'identification de l'utilisateur. Elle peut en outre comprendre des données supplémentaires, telles que par exemple une adresse Email de l'utilisateur @1, lorsque l'identifiant est d'un autre type, ou encore un état ST du compte de l'utilisateur, destiné à prendre au moins une valeur « bloquée » suite à une tentative d'authentification échouée ou une valeur « débloquée » sinon.

En E2, l'équipement serveur décide du résultat de l'authentification. Si le mot de passe produit par l'utilisateur correspond au mot de passe de référence stocké en mémoire, elle a réussi et on passe à l'étape E3. Sinon, elle a échoué et la demande d'accès au service est rejetée.

En E3, l'équipement serveur met en œuvre une identification de l'équipement terminal ET1. Elle s'appuie sur l'envoi par l'équipement serveur d'une commande d'empreinte REQ CES comprenant une pluralité de paramètres de configurations. Par exemple, ces paramètres sont relatifs à un type et/ou à une version du navigateur ou de l'application utilisé(e) pour accéder au service, à une ou plusieurs tailles d'écrans du premier équipement terminal, à des configurations choisies par l'utilisateur comme par exemple le langage du navigateur, le langage du système d'exploitation ou encore une liste des modules logiciels d'extension (pour « plug-in » en anglais) installés sur le navigateur.

Le résultat de cette commande est une empreinte ES1 qui est dite « statique » parce qu'elle est formée de données de configuration CONF1, CONF2, ..., CONFK du navigateur web ou de l'application utilisé(e) par l'équipement terminal, correspondant aux paramètres de configuration spécifiés dans la commande CES. Ces données sont a priori stables dans le temps. Elles sont aussi directement lisibles ou faciles à reproduire. Par exemple, on connaît l'empreinte d'agent utilisateur (pour « user agent », en anglais), qui est une chaîne de caractères décrivant généralement le modèle et la version de l'application cliente ou du navigateur web.

Une telle commande d'empreinte statique peut être écrite en langage JavaScript. Par exemple, il s'agit d'un script CES comprenant des instructions de type « navigator.language » ou encore « screen.width » pour spécifier des paramètres de configuration. Le script obtenu est inséré dans une page HTML envoyée à l'équipement client. Idéalement, l'exécution de ce script implique l'envoi du résultat au server Sv par l'intermédiaire d'une requête http, par exemple de type GET ou POST.

Avantageusement, l'équipement serveur S complète l'empreinte statique ES1 résultante du script CES à l'aide de données de configuration supplémentaires qui sont systématiquement transmises par l'équipement client dans les en-têtes des requêtes http. telles que l'agent utilisateur (pour « user agent », en anglais) ou encore le langage accepté (« Accept-Language », en anglais), via un programme qui peut par exemple être écrit en Java.

On notera que, comme la commande CES est généralement la même quel que soit l'équipement terminal, elle peut être facilement capturée par un utilisateur malveillant ou pirate, qui est aussi capable de reproduire l'empreinte stockée par le serveur pour l'équipement terminal de l'utilisateur dont le pirate cherche à usurper l'identité.

Par exemple, le pirate change les valeurs des paramètres de configuration de son propre navigateur de façon à ce que le résultat de la commande d'empreinte CES correspond à l'empreinte ES1 produit par l'équipement terminal de l'utilisateur UT. En variante, il intercepte la réponse comprenant l'empreinte produite par son navigateur en réponse à la commande d'empreinte CES et il en modifie les valeurs de façon à rendre cette empreinte identique à celle de l'équipement terminal de l'utilisateur UT.

Lors d'une première connexion, avantageusement à l'occasion de l'enregistrement de l'utilisateur au service, l'empreinte résultat ES1 générée par l'équipement terminal ET1 de la commande CES a été stockée en mémoire, en association avec un identifiant ID-ES1 de cette commande d'empreinte, par exemple dans une table TES d'empreintes statiques de la mémoire M1, telle qu'illustrée par la Figure **5B****.**

Bien sûr un utilisateur peut lier plusieurs équipements terminaux à un même compte. Dans ce cas la table TES comprendra autant de lignes ou d'enregistrements que d'empreintes statiques référencées pour cet utilisateur.

L'empreinte statique ES1 constitue un identifiant de l'équipement terminal ET1. Avantageusement, elle est associée à l'identifiant de l'utilisateur UT dans une ligne LUT d'une table TA, dite table d'association, stockée dans la mémoire M1 de l'équipement serveur S. Un exemple de table est illustré par la Figure **5E****.**

Si l'utilisateur ID-UT a enregistré préalablement plusieurs équipements terminaux ET1, ET2, la table TA comprend autant de lignes Ln1, Ln2 que d'identifiants d'empreintes statiques ID-ES1, ID-ES2 associées à l'utilisateur ID-UT.

Sur réception en E4 d'une empreinte ES produite par l'équipement terminal ET1, une évaluation de cette empreinte est réalisée en E5 par comparaison avec les empreintes de références stockées en mémoire pour cet utilisateur. Un score de correspondance est calculé pour chaque empreinte de référence, puis comparé à un seuil prédéterminé. Par exemple, les valeurs de chacune des données de configuration CONF1, CONF2..CONFK sont comparées à celle d'une empreinte de référence de façon à estimer un score local par type de donnée et un score global est dérivé sous la forme d'une somme pondérée des scores locaux par exemple à l'aide d'une distance pondérée de Hamming (pour « Weighted Hamming Distance » , en anglais). Seuls les scores supérieurs au seuil sont conservés. Si un seul score subsiste, on décide en E6 avoir identifié l'équipement terminal ET1, ET2 associé à l'identifiant d'empreinte ID-ES1, ID-ES2 correspondant. Si plusieurs scores ont passé le seuil, on choisit le plus élevé. On passe alors à l'étape E7.

Sinon, si aucun score ne dépasse le seuil, l'identification de l'équipement terminal est considérée comme échouée.et la demande d'accès au service est rejetée.

Avantageusement, en cas de non-identification, le compte peut être bloqué. Pour ce faire, la valeur du champ ST de la ligne de la table TU correspondant à l'utilisateur ID-UT est changée et mise à la valeur « bloquée ». Un message, par exemple de type mail (ou tout autre système de communication tiers) est alors envoyé à l'utilisateur à l'adresse @1 enregistrée. Par exemple, ce message comprend un code de déblocage du compte. Deux situations sont alors possibles :
1) la tentative d'authentification était légitime, mais l'utilisateur a tenté de se connecter depuis un nouvel équipement terminal. Il peut alors débloquer son compte et associer le nouveau terminal en rentrant le code qu'il a reçu par mail depuis le nouveau terminal ;
2) la tentative était frauduleuse, l'utilisateur est alors fortement incité à changer de mot de passe. Il peut débloquer son compte en utilisant le code envoyé avec le mail depuis un terminal de son choix.

Les étapes précédentes ont permis d'identifier l'équipement terminal ET1 associé à l'utilisateur ID-UT par son empreinte statique ES1. Ensuite en E7, une étape d'authentification dynamique est mise en œuvre.

Au cours de cette étape, on obtient au moins une commande de rendu de motif paramétrable, qu'on désigne aussi par le terme « challenge ». Lors d'une phase préalable d'enregistrement, par exemple pendant la saisie d'un login et d'un mot de passe par l'utilisateur, cette commande a été transmise à l'équipement terminal ET1 de l'utilisateur UT, par exemple sous la forme d'un programme exécutable ou script SC1₁. Un résultat d'exécution de cette commande, à savoir le rendu de motif R1₁, a été produit par l'équipement terminal puis reçu par l'équipement serveur S qui l'a stocké en mémoire, comme référence, en association avec l'identifiant ID-CRP1₁ de la commande et le script SC1₁ correspondant.

Une telle commande spécifie des paramètres de description d'un motif à exécuter. Ce motif peut être audiovisuel ou graphique. Dans un mode de réalisation particulier, il s'agit d'une commande de rendu du type « canvas » précédemment évoqué. Dans ce cas, les paramètres définissent des caractéristiques géométriques du motif, ou bien sa police, ses couleurs, ou encore le cadre dans lequel il doit être affiché par le navigateur web ou l'application de l'équipement terminal.

Selon un mode de réalisation de l'invention le script SC1₁ de la commande est écrit dans un langage de type JavaScript. Ce script est créé à partir des paramètres de description du motif à l'aide d'un programme de génération de script utilisant un langage de programmation par exemple de type Python. Côté serveur une fonction PHP exécute ce programme pour obtenir le script en JavaScript.

Par exemple, le script est inséré à l'aide d'une fonction PHP de type echo dans une page web envoyée au client suite à l'authentification de l'utilisateur ou suite à l'authentification de l'empreinte statique.

L'équipement terminal exécute le script SC1₁ à l'aide de son navigateur ou de son application cliente et renvoie le résultat au serveur par le biais d'une requête HTTP de type GET ou POST. Le résultat R de la requête est capté par le serveur.

Cette commande SC1₁ et son résultat de référence R1₁ associé constituent un couple de données d'authentification dynamique de l'équipement terminal ET1 identifié par ID-CRP1₁. Le caractère dynamique vient du fait qu'étant paramétrable, potentiellement par un grand nombre de facteurs, une telle commande peut être renouvelée quasiment à l'infini.

Avantageusement ce couple ID-CRP1₁ de données d'authentification dynamiques est stocké dans une ligne d'une table TED telle qu'illustrée par la Figure **5C****.** Par exemple, une ligne comprend l'identifiant ID-CRP1₁ du couple, le script SC1₁ de la commande correspondante et le résultat de l'exécution de cette commande R1₁ produit par l'équipement terminal ET1 lors de l'enregistrement de cet équipement qui constitue le rendu de motif de référence.

Selon un mode de réalisation de l'invention, lors de l'enregistrement, plusieurs premières commandes distinctes SC1₁, SC1₂..., SC1_{N}, avec N entier supérieur ou égal à deux, ont été transmises à l'équipement terminal ET1 de l'utilisateur ID-UT et les résultats correspondants ont été reçus, ce qui a permis de constituer une réserve de couples ID-CRP1₁, ID-CRP1₂,...ID-CRP1_{N} de données d'authentification dynamiques exploitables lors des requêtes d'authentifications à venir.

Par exemple ces couples de données supplémentaires SC1₂-R1₂, SC1₃-R1₃...SC1_{N}-R1_{N} sont stockés dans une table de réserve TED'. Par exemple, cette table est enregistrée dans la première mémoire M1 ou dans une deuxième mémoire M2.

Selon un autre mode de réalisation, lors de l'enregistrement, une même commande de rendu SC1₁ est transmise plusieurs fois à l'équipement terminal ET1 de l'utilisateur et les résultats obtenus R1,t₁, R1,t₂...R1,T, avec T entier supérieur ou égal à 2, pour chaque transmission sont comparés entre eux. Par exemple, seules les commandes qui ont obtenu des résultats identiques à chaque exécution sont effectivement enregistrées en mémoire comme données d'authentification dynamique, ce qui garantit une plus grande stabilité du procédé d'authentification.

En E7, le script SC1₁ du couple identifié par ID-CRP1₁ est envoyé à l'équipement terminal ET1.

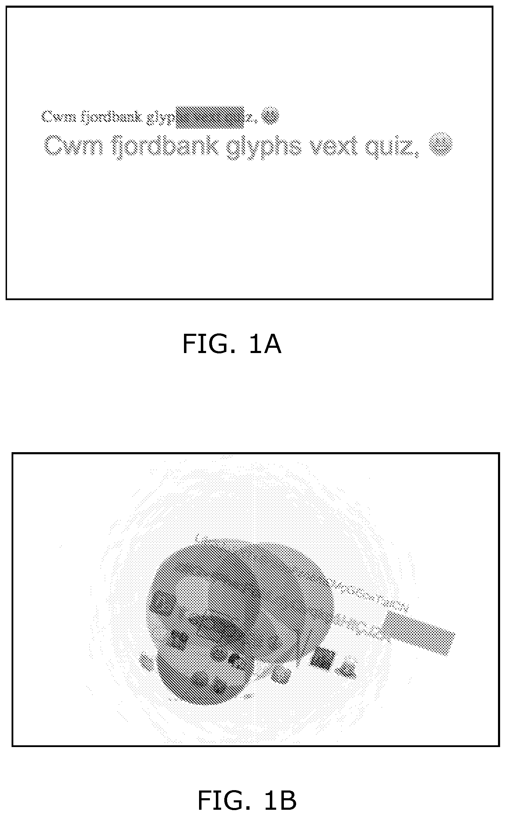

Sur réception en E8 d'une réponse de l'équipement terminal ET1 comprenant un résultat R, ce résultat est évalué par comparaison à la référence R1₁ stockée en mémoire. Un score de correspondance est calculé en E9. Par exemple pour une commande de type « canvas », le résultat de la commande est une image telle que celles des figures **1A** et **1B****,** dont on compare les intensités de pixel à celles de l'image de référence R1₁.

Une décision est prise en E10 en fonction du score de correspondance calculé. S'il est supérieur à un seuil prédéterminé, l'authentification est considérée comme réussie, sinon comme échouée. Par exemple, pour une commande de type « canvas », l'authentification est considérée comme réussie, si les images sont identiques.

En variante, l'équipement serveur S commande successivement plusieurs exécutions de rendu à l'équipement terminal ET1. Autrement dit les étapes E7, E8, E9 et E10 sont répétées pour des commandes distinctes. Ceci permet d'augmenter la sécurité de l'authentification en rendant plus difficile la reproduction des résultats par un utilisateur malveillant. On notera que les commandes sont émises successivement, suite à une décision d'authentification réussie de la commande précédente, de façon à ne pas gaspiller inutilement des couples de données d'authentification dynamiques.

Suite à cette étape d'authentification dynamique, qu'elle soit réussie ou échouée, une étape E11 ou E12 de mise à jour du couple de données d'authentification dynamiques ID-CRP1₁ de l'équipement terminal stocké en mémoire est mise en œuvre.

Si l'authentification est réussie, l'étape de mise à jour E11 comprend les sous-étapes suivantes :
- En E11₁, un nouveau couple de commande de rendu CRP1₂ est obtenu. Deux modes de réalisation sont envisagés.
   Dans le premier mode de réalisation de l'invention selon lequel plusieurs couples de données d'authentification CRP1₂-R1₂, CRP1₃-R1₃...CRP1_{N}-R1_{N} ont été stockés dans la table de réserve TED', l'étape E11₁ consiste à récupérer un couple commande-résultat en réserve, par exemple le couple CRP1₂-R1₂.
   Selon un deuxième mode de réalisation de l'invention, l'équipement serveur S ne dispose pas de couple commande-rendu en réserve pour l'équipement client ET1. Au cours de l'étape E11₁', il sélectionne un nouveau script SC1₂, le transmet à l'équipement terminal ET1 identifié et réceptionne le résultat R1₂.
   On notera que, pour alimenter la table de réserve du premier mode de réalisation, il convient de profiter régulièrement d'une authentification réussie avec l'utilisateur et son équipement terminal ET1 pour lui transmettre un ensemble de nouvelles commandes. En outre, une vérification de l'état du stock peut avantageusement être mise en œuvre de façon à déclencher par exemple l'étape E11₁' lorsque le nombre de couples en réserve est inférieur à un seuil prédéterminé, par exemple égal à 3;
   En E11₂, le couple de données d'authentification ID-CRP1₁ qui vient d'être utilisé est remplacé par le nouveau couple ID-CRP2₁. Il en résulte que le couple de données ID-CRP1₁ ne sera pas réutilisé pour une prochaine authentification de l'équipement client.

Si l'authentification est échouée, la demande de connexion est rejetée et pour plus de sécurité, le compte de l'utilisateur peut être bloqué. Par exemple, la table TU est mise à jour en changeant l'état ST du compte de l'utilisateur et en le forçant à la valeur « bloquée ».

Selon l'invention, l'étape de mise à jour des données d'authentification de l'équipement terminal ET1 consiste alors en une étape E12 de suppression du couple de données ID-CRP1₁ de la mémoire M1. De cette manière, il ne pourra plus être utilisé pour une authentification future de l'équipement terminal ET1.

On comprend qu'après cette opération, l'équipement terminal ET1 associé à l'identifiant de l'utilisateur ne comprend plus de données d'authentification valides.

Avantageusement, le procédé comprend en outre les étapes suivantes :
- une étape E13 d'authentification supplémentaire ou de vérification de l'identité de l'utilisateur comprenant l'émission d'un message de requête d'authentification supplémentaire à destination de l'équipement terminal ET1 identifié, comprenant un paramètre d'authentification, tel que par exemple un code comprenant une séquence de caractères alphanumériques. Avantageusement, l'équipement serveur transmet à l'équipement terminal ET1 pour lequel l'authentification a échoué une requête http de type GET ou POST spécifiant une page d'accueil comprenant un message qui l'invite à entrer le code en question pour débloquer son compte.
- Si le code a été correctement entré, cela signifie que l'utilisateur est bien celui qu'il prétend être et qu'il a utilisé un nouvel équipement terminal ET2, non encore enregistré par le serveur S. Le procédé déclenche alors une étape E14 d'enregistrement de ce nouvel équipement terminal ET2. La phase d'enregistrement se déroule comme décrit précédemment. Un identifiant de ce nouvel équipement terminal, par exemple de type empreinte statique ES2, est enregistré, en association avec l'identifiant de l'utilisateur ID-UT et au moins un couple de données d'authentification ID-CRP2₁ du nouvel équipement terminal ET2 est enregistré en mémoire. Par exemple, une nouvelle ligne Ln2 est créée dans la table TA de la Figure **5E****.** Elle associe à l'identifiant de l'utilisateur ID-UT, l'empreinte statique ES2 et l'identifiant de commande dynamique ID-CRP2₁. A l'issue de cette phase, le compte de l'utilisateur est débloqué en basculant le champ état ST de la table TU à la valeur « débloquée ».
   On notera toutefois que ce cas reste peu probable, lorsque l'étape d'identification de l'équipement terminal par une commande d'empreinte statique est mise en œuvre. En effet, l'étape d'authentification dynamique de l'équipement terminal n'étant déclenchée que suite à une identification réussie, cela implique que ce nouvel équipement terminal ait généré une empreinte statique très proche de celle du premier équipement ET1.
- Si le code n'est pas correctement entré par l'utilisateur, c'est un utilisateur malveillant qui demande l'accès au service. Le compte utilisateur reste bloqué. Si l'utilisateur tente ultérieurement d'accéder au service depuis un de ses équipements terminaux, une étape de requête d'authentification supplémentaire similaire à l'étape E13 déjà décrite sera déclenchée afin de débloquer son compte. Le processus de déblocage comprendra avantageusement un changement des données d'authentification de l'utilisateur, par exemple de mot de passe et, pour un équipement terminal identifié ET1 par son empreinte statique ES1, le remplacement des données d'authentification dynamiques ID-CRP1₁ précédemment supprimées. Si des couples de données sont disponibles en réserve dans la table TED', l'un d'eux peut avantageusement être utilisé.

Selon un autre mode de réalisation de l'invention, on associe au(x) couples de commandes de rendu de motifs et résultats associés stockés en mémoire TED et TED' un champ représentatif d'un état d'utilisation STED. Ce champ est par exemple un booléen qui peut prendre la valeur 1 représentative de l'état « utilisable » et la valeur 0 représentative de l'état « utilisé ». Avantageusement, dès que l'équipement serveur émet une requête comprenant le script associé à la commande d'un couple ID-CRP1₁, il change la valeur de l'état et la fait basculer dans l'état « utilisé » . Ceci permet notamment d'éviter le cas d'un attaquant qui stoppe volontairement l'authentification en bloquant l'envoi à l'équipement serveur du résultat de la commande par son équipement terminal. En effet, dans ce cas de figure, l'authentification n'aboutit pas. Aucune décision d'échec ou de réussite n'est prise, si bien que la mise à jour des données d'authentification selon l'invention n'est pas déclenchée. Néanmoins, selon ce mode de réalisation, lors d'une demande d'authentification suivante, l'équipement serveur vérifiera l'état STED du couple de données d'authentification avant de transmettre la commande de rendu paramétrable à l'équipement terminal et ne déclenchera l'envoi que si l'état est dans le mode « utilisable ». Si ce n'est pas le cas, il ira chercher un couple de réserve dans la table TED'. On comprend que ce champ supplémentaire permet d'éviter qu'un utilisateur malveillant puisse forcer la réutilisation d'une commande déjà utilisée par le procédé d'authentification. La valeur du champ état STED1₂ est avantageusement initialisée lors de l'enregistrement d'un couple de données ID-CRP12 dans la table de réserve, à un état à la valeur « utilisable ». Une fois le couple ID-CRP1₂ prélevé pour servir de données d'authentification dans la table TED, le champ STED du couple de réserve est mis à la valeur « utilisé ».

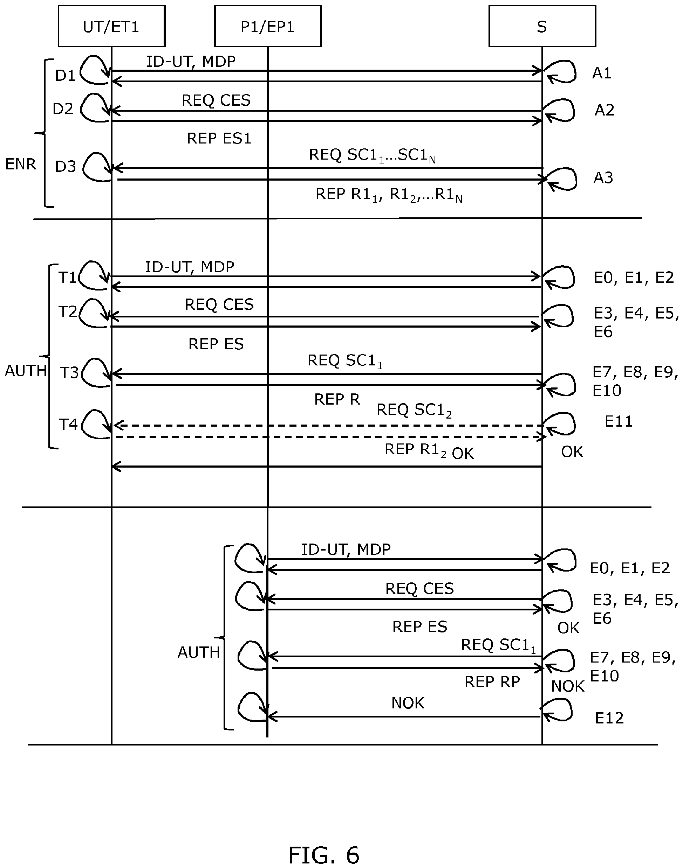

En relation avec la Figure **6****,** on décrit maintenant les échanges d'informations entre l'équipement terminal ET1 de l'utilisateur UT et l'équipement serveur S et les opérations réalisées de part et d'a utre.

Lors d'une première connexion au service Sv, l'utilisateur UT est invité par le serveur en A1 à s'enregistrer en choisissant un identifiant ID-UT et un mot de passe MDP qu'il envoie au serveur en D1. D'autres informations telles que son adresse mail @1 peuvent lui être demandées. À la réception de ces informations, le serveur les stocke en mémoire, par exemple dans la table TU. Pendant ou suite à cet échange, l'équipement serveur S envoie à l'équipement terminal ET1 en A2 une commande d'empreinte statique CES que l'équipement client exécute en D2. Il renvoie le résultat ES1 au serveur S qui le stocke accompagné d'un identifiant de l'équipement terminal ID-ES1, par exemple dans la table TES.

Pendant ou suite à cet échange, l'équipement serveur S envoie en A3 à l'équipement terminal ET1 une ou plusieurs commandes paramétrables de rendu SC1₁, SC1₂, ...SC1_{N}, avec N entier non nul.

Contrairement à la commande d'empreinte statique CES qui est fixe et généralement commune à tous les équipements terminaux, la commande paramétrable de rendu peut être choisie de façon à être spécifique à un unique terminal. Pour ce faire, une telle commande comprend un grand nombre P de paramètres, typiquement supérieur ou égal à 40. Un paramètre pouvant généralement prendre un nombre de valeurs supérieur ou égal à 100, ceci garantit de ne pas générer deux fois la même commande. De plus, les paramètres d'une telle commande sont avantageusement générés de façon aléatoire. Ceci permet de rendre quasiment impossible la prédiction d'une commande à venir et d'autre part d'éviter la répétition dans le temps de l'envoi d'une même commande.

Dans un mode de réalisation particulier, la commande de rendu est de type « canvas » dont le script comprend notamment une instruction de type *fillStyle(p).* p est un paramètre contrôlant la couleur de remplissage d'un élément tel qu'une ellipse à reproduire par l'équipement terminal dans une surface de dessin. La couleur de remplissage *p* est de type 'rgb' et peut prendre plus de 16 millions de valeurs différentes.

En réponse, l'équipement terminal ET1 génère en D3 les rendus commandés et renvoie les résultats R1₁, R1₂,...R1_{N} produits à l'équipement serveur S.

À la réception, le serveur S stocke les couples commande-résultat obtenus en mémoire. Avantageusement, il sélectionne un couple ID-CRP1₁ pour former les données d'authentification de l'équipement terminal ET1 qu'il stocke avantageusement dans la table TED. Les autres couples sont mis en réserve dans une table TED' stockée par exemple dans une deuxième mémoire M2.

Ces deux derniers échanges de commandes d'empreintes statique et dynamique sont exécutés très rapidement et de façon complètement transparente pour l'utilisateur UT. Comme précédemment décrit, leurs scripts sont avantageusement insérés dans une page HTML. Le temps de traitement complet est d'environ 1s par commande.

Lors d'une deuxième connexion au service Sv sollicitée par l'utilisateur UT depuis le même équipement terminal ET1, l'utilisateur est invité par le serveur dans une première phase d'authentification E0, E1, E2 de l'utilisateur à saisir son identifiant et son mot de passe, ce qu'il fait en T1. Les informations saisies sont traitées par le serveur qui les compare à celles qu'il a stockées en mémoire.

En cas de succès de l'authentification, le serveur envoie à l'équipement terminal ET1 la commande d'empreinte statique CES en E3. L'équipement terminal répond en T2 en produisant l'empreinte statique ES à partir des configurations matérielles et logicielles demandées. Le serveur la reçoit en E4, la compare en E5 à(aux) empreinte(s) stockée(s) en mémoire pour cet utilisateur UT. S'il trouve une correspondance avec l'une d'elles, il considère en E6 avoir identifié l'équipement terminal ET1.

À partir de l'empreinte statique ES1 qui identifie le terminal ET1, le serveur récupère la commande de rendu paramétrable SC1₁ qui fait partie de ses données d'authentification dynamiques et il l'envoie en E7 au terminal ET1. Le terminal répond en exécutant la commande en T3 et en renvoyant le rendu de motif R1₁ produit.

À la réception, le serveur S compare en E9 le résultat reçu en E8 à la référence qu'il a stocké en mémoire. En cas de correspondance suffisante, il décide en E10 que l'authentification est réussie. Selon l'invention, il met immédiatement à jour les données d'authentification ID-CRP1₁, en les remplaçant par un autre couple. Avantageusement, il va chercher en E11₁ un couple ID-CRP1₂ précédemment mis en réserve dans la table TED', ou bien il génère en E11₁' une nouvelle commande SC1₂ et la transmet en E11₂ au terminal ET1. Le terminal lui renvoie le rendu de motif R1₂ en T4. A réception du résultat R1₂, il stocke le nouveau couple de données d'authentification ID-CRP1₂ en mémoire à la place de l'ancien couple ID-CRP1₁. Il délivre ensuite une autorisation d'accès au service pour l'utilisateur UT depuis son terminal ET1 et la transmet à son module TS qui exécute le service distant.

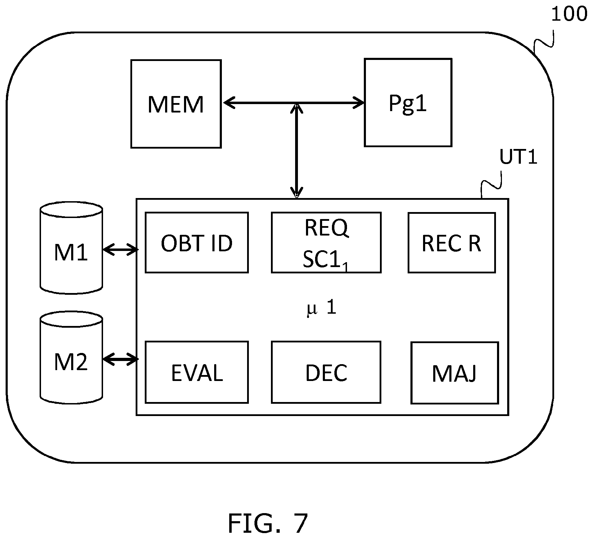

La figure **7** présente la structure simplifiée d'un dispositif d'authentification 100 adapté pour mettre en œuvre le procédé d'authentification selon l'un quelconque des modes particuliers de réalisation de l'invention qui viennent d'être décrits. Le dispositif 100 est notamment configuré pour:
- authentifier l'utilisateur à partir d'informations d'identification, par exemple un identifiant et un mot de passe ;
- en cas d'authentification réussie de l'utilisateur, authentifier l'équipement terminal à partir d'informations d'authentification stockées dans une première mémoire de l'équipement serveur, par exemple la mémoire M1 en association avec les informations d'identification de l'utilisateur, comprenant une commande d'exécution de rendu d'un premier motif, ladite commande comprenant des paramètres de description du premier motif, et un rendu du premier motif reçu du client, dit motif de référence, comprenant:
   ∘ un envoi à l'équipement client de la commande d'exécution de rendu du premier motif;
   ∘ sur réception d'une réponse comprenant un rendu du premier motif par l'équipement client, le comparer au rendu de référence et évaluer un score de correspondance;
   ∘ décider d'une authentification réussie étant décidé lorsque le score de correspondance est supérieur à un seuil prédéterminé ;

Selon l'invention, le dispositif est configuré pour mettre à jour les informations d'authentification de l'équipement terminal, suite à l'authentification.

Le dispositif 100 est en outre configuré pour mettre en œuvre les différents modes de réalisation de l'invention qui viennent d'être décrits en relation avec les figures **3** et **6****.**

Selon un mode particulier de réalisation de l'invention, les étapes du procédé d'authentification sont mises en œuvre par des instructions de programme d'ordinateur. Pour cela, le dispositif 100 a l'architecture classique d'un ordinateur et comprend notamment une mémoire MEM, une unité de traitement UT1, équipée par exemple d'un microprocesseur µ1, et pilotée par le programme d'ordinateur Pg1 stocké en mémoire MEM1. Le programme d'ordinateur Pg1 comprend des instructions pour mettre en œuvre les étapes du procédé d'authentification tel que décrit ci-dessus, lorsque le programme est exécuté par le microprocesseur µ1.

A l'initialisation, les instructions de code du programme d'ordinateur Pg1 sont par exemple chargées dans une mémoire RAM avant d'être exécutées par le microprocesseur µ1 de l'unité de traitement UT1.

Selon un autre mode particulier de réalisation de l'invention, le procédé d'authentification est mis en œuvre par des modules ou unités fonctionnel(le)s. Pour cela, le dispositif 100 comprend en outre les modules suivants:
- authentification AUTH UT de l'utilisateur à partir d'informations d'identification, par exemple un identifiant et un mot de passe ;
- en cas d'authentification réussie de l'utilisateur, authentification AUT ET de l'équipement terminal à partir d'informations d'authentification stockées dans une première mémoire de l'équipement serveur, par exemple la mémoire M1 en association avec les informations d'identification de l'utilisateur, comprenant une commande d'exécution de rendu d'un premier motif, ladite commande comprenant des paramètres de description du premier motif, et un rendu du premier motif reçu du client, dit motif de référence, ladite authentification comprenant:
   ∘ l'envoi REQ SC1₁ à l'équipement client de la commande d'exécution de rendu du premier motif;
   ∘ sur réception d'une réponse comprenant un rendu R du premier motif par l'équipement client, une comparaison au rendu de référence R1₁ et une évaluation EVAL d'un score de correspondance;
   ∘ décision DEC d'une authentification réussie étant décidé lorsque le score de correspondance est supérieur à un seuil prédéterminé ;

Selon l'invention, le dispositif comprend une unité de mise à jour MAJ les informations d'authentification de l'équipement terminal, apte à être mise en œuvre suite à l'authentification.

De façon avantageuse, un tel dispositif 100 stocke dans la première mémoire M1 les données d'authentification de l'utilisateur et de l'équipement terminal mises en œuvre par l'invention. Dans un mode de réalisation particulier elle comprend les tables TU, TES, TED, TED' et TA présentées en relation avec les Figures **5A** à **5E****.** Optionnellement, la table de réserve TED' peut être enregistrée dans une deuxième mémoire M2.

Le dispositif 100 peut être intégré à un équipement serveur S apte à héberger le service Sv. Le dispositif 100 est alors agencé pour coopérer au moins avec les modules suivants du serveur S :
- un module E/R d'émission/réception de données, permettant l'échange de données d'authentification avec l'équipement client via le réseau de télécommunications RT ;
- un module de traitement TS, apte à exécuter le service Sv, comme illustré par la Figure 2.

Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en œuvre la fonction correspondante au module lorsque les instructions de code sont exécutées par un le processeur. Sous une forme matérielle, un tel module fonctionnel peut mis en œuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour Application Specific Integrated Circuit en anglais), des circuits FPGA pour Field Programmable Gate Arrays en anglais, un câblage d'unités logiques.

On notera que l'invention qui vient d'être décrite, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé d'authentification d'un utilisateur d'un équipement terminal (ET1, ET2) connecté à un réseau de communication (RT), pour l'accès depuis cet équipement terminal à un service distant (Sv) hébergé par un équipement serveur (S) connecté audit réseau, ledit procédé comprenant les étapes suivantes, destinées à être mises en œuvre par l'équipement serveur :
- authentification (E0, E1, E2) de l'utilisateur à partir d'informations d'identification;
- en cas d'authentification réussie de l'utilisateur, authentification de l'équipement client à partir d'informations d'authentification (ID-CRP1₁) stockées dans une première mémoire de l'équipement serveur en association avec les informations d'identification de l'utilisateur, comprenant une commande d'exécution de rendu d'un premier motif, ladite commande (SC1₁) comprenant des paramètres de description du premier motif dont les valeurs sont sélectionnées aléatoirement parmi une pluralité de valeurs prédéterminées, et un rendu (R1₁) du premier motif reçu de l'équipement client, dit motif de référence, ladite authentification comprenant les sous-étapes suivantes :
∘ envoi (E7) à l'équipement client de la commande d'exécution de rendu du premier motif;
∘ sur réception (E8) d'une réponse comprenant un rendu du premier motif par l'équipement client, comparaison (E9) au rendu de référence et évaluation d'un score de correspondance;
- décision (E10) d'authentification de l'équipement client en fonction du score évalué, une authentification réussie étant décidée lorsque le score de correspondance est supérieur à un seuil prédéterminé ;
**caractérisé en ce que** suite à la décision d'authentification, le procédé comprend une étape (E11, E12) de mise à jour des informations d'authentification de l'équipement terminal, ladite étape comprenant, suite à une authentification échouée, une suppression de la commande d'exécution de rendu du premier motif et du rendu de premier motif de la première mémoire et, en cas d'authentification réussie de l'équipement client, un remplacement de la commande de rendu du premier motif et du rendu de référence stockés dans la première mémoire, par une commande d'exécution de rendu d'un deuxième motif, distinct du premier, et un rendu de deuxième motif.

2. Procédé d'authentification selon la revendication **1, caractérisé en ce que** l'étape de mise à jour (E11) comprend, en cas d'authentification réussie, une sous-étape (E11₁) d'obtention du rendu de deuxième motif par le client par lecture dans une deuxième mémoire de l'équipement serveur.

3. Procédé d'authentification selon la revendication **1, caractérisé en ce que** l'étape de mise à jour (E11) comprend suite à l'authentification réussie, une sous-étape (E11₁') d'obtention du rendu de deuxième motif par le client par émission de la commande (SC1₂) d'exécution de rendu du deuxième motif, et réception d'une réponse comprenant un rendu du deuxième motif par le client.

4. Procédé d'authentification selon l'une des revendications précédentes, **caractérisé en ce que** la commande d'exécution d'un rendu de premier ou de deuxième motif est une commande appartenant à un groupe comprenant au moins :
- une commande de type « canvas » destinée à produire un motif graphique dans un cadre rectangulaire de taille prédéterminée ;
- une commande de type contexte audio, comprenant des paramètres de description d'un signal audio et destinée à générer un rendu audio.
- une commande de type « getClientRects », destinée à générer une pluralité de rectangles correspondant aux limites de lignes de texte d'un élément HTML.

5. Procédé d'authentification selon la revendication **1, caractérisé en ce que**, suite à une authentification échouée, le procédé comprend une étape (E13) de vérification de l'identité de l'utilisateur comprenant l'émission d'une requête d'authentification supplémentaire à destination de l'équipement terminal identifié, et **en ce que**, en cas de résultat positif, une création (E14) de nouvelles données d'authentification associées à un deuxième équipement client (ET2), comprenant une étape d'émission d'une commande d'exécution de rendu d'un troisième motif (SC2₁) par le deuxième équipement client et, sur réception du rendu (R2₁), une étape de stockage de données d'authentification (ID-CRP2₁), associant à un identifiant du deuxième équipement client, ladite commande de rendu de troisième motif et ledit rendu.

6. Dispositif (100) d'authentification d'un utilisateur d'un équipement terminal pour l'accès depuis un navigateur client de l'équipement terminal à un service distant hébergé par un équipement serveur, ledit dispositif comprenant une machine de calcul dédiée à ou configurée pour :
- authentifier l'utilisateur à partir d'informations d'identification;
- en cas d'authentification réussie de l'utilisateur, authentifier le navigateur client à partir d'informations d'authentification stockées dans une première mémoire de l'équipement serveur en association avec les informations d'identification de l'utilisateur, comprenant une commande d'exécution de rendu d'un premier motif, ladite commande comprenant des paramètres de description du premier motif dont les valeurs sont sélectionnées aléatoirement parmi une pluralité de valeurs prédéterminées, et un rendu du premier motif reçu du client, dit motif de référence, ladite authentification comprenant:
o un envoi à l'équipement client de la commande d'exécution de rendu du premier motif;
o sur réception d'une réponse comprenant un rendu du premier motif par l'équipement client, une comparaison au rendu de référence et une évaluation d'un score de correspondance;
o décider d'une authentification réussie étant décidé lorsque le score de correspondance est supérieur à un seuil prédéterminé ;
**caractérisé en ce que,** suite à la décision d'authentification, la machine de calcul est configurée pour mettre à jour les informations d'authentification du navigateur client de l'équipement terminal, en supprimant, suite à une authentification échouée, la commande d'exécution de rendu du premier motif et le rendu de premier motif de la première mémoire et, en cas d'authentification réussie de l'équipement client, en remplaçant la commande de rendu du premier motif et du rendu de référence stockés dans la première mémoire, par une commande d'exécution de rendu d'un deuxième motif, distinct du premier, et un rendu de deuxième motif.

7. Equipement serveur (S), comprenant un module (E/R) d'émission/réception vers et en provenance d'un réseau de télécommunications (RT), un module de traitement (TS) apte à exécuter un service distant (Sv), **caractérisé en ce qu'**il comprend en outre un dispositif (100) d'authentification d'un utilisateur d'un équipement terminal (ET1) souhaitant accéder au service, selon la revendication **6.**

8. Programme d'ordinateur (Pg1) comportant des instructions pour la mise en œuvre du procédé d'authentification selon l'une quelconque des revendications **1 à 5,** lorsque ledit programme est exécuté par un processeur.

## Patentansprüche

1. Verfahren zur Authentifizierung eines Benutzers einer Endgeräteausrüstung (ET1, ET2), die an ein Kommunikationsnetz (RT) angeschlossen ist, für den Zugriff von dieser Endgeräteausrüstung auf einen entfernten Dienst (Sv), der von einer an das Netz angeschlossen Serverausrüstung (S) gehostet wird, wobei das Verfahren die folgenden Schritte umfasst, die zur Durchführung durch die Serverausrüstung bestimmt sind:
- Authentifizieren (E0, E1, E2) des Benutzers auf der Basis von Identifikationsinformationen;
- im Fall einer erfolgreichen Authentifizierung des Benutzers, Authentifizieren der Client-Ausrüstung auf der Basis von Authentifizierungsinformationen (ID-CRP1₁) die in einem ersten Speicher der Serverausrüstung in Kombination mit den Identifikationsinformationen des Benutzers gespeichert sind, umfassend einen Renderingausführungsbefehl eines ersten Motivs, wobei der Befehl (SC1₁) Beschreibungsparameter des ersten Motivs umfasst, deren Werte zufällig aus einer Vielzahl vorbestimmter Werte ausgewählt sind, und Rendern (R1₁) des ersten von der Client-Ausrüstung empfangenen Motivs, bezeichnet als Referenzmotiv, wobei die Authentifizierung die folgenden Unterschritte umfasst:
∘ Senden (E7) des Renderingausführungsbefehls des ersten Motivs an die Client-Ausrüstung;
∘ bei Empfang (E8) einer Antwort, die ein Rendering des ersten Motivs durch die Client-Ausrüstung umfasst, Vergleichen (E9) mit dem Referenzrendering und Evaluieren eines Übereinstimmungsscores;
- Authentifizierungsentscheidung (E10) der Client-Ausrüstung in Abhängigkeit mit dem evaluierten Score, wobei eine erfolgreiche Authentifizierung entschieden wird, wenn der Übereinstimmungsscore über einem vorher festgelegten Grenzwert liegt;
**dadurch gekennzeichnet, dass** das Verfahren infolge der Authentifizierungsentscheidung einen Aktualisierungsschritt (E11, E12) der Authentifizierungsinformationen der Endgeräteausrüstung umfasst, wobei der Schritt infolge einer fehlgeschlagenen Authentifizierung eine Unterdrückung des Renderingausführungsbefehls des ersten Motivs und des Renderings des ersten Motivs des ersten Speichers und im Fall einer erfolgreichen Authentifizierung der Client-Ausrüstung eine Ersetzung des im ersten Speicher gespeicherten Renderingbefehls des ersten Motivs und des Referenzrenderings durch einen Renderingausführungsbefehl eines zweiten Motivs, das sich vom ersten unterscheidet, und ein Rendering des zweiten Motivs umfasst.

2. Authentifizierungsverfahren nach Anspruch **1, dadurch gekennzeichnet, dass** der Aktualisierungsschritt (E11) im Fall einer erfolgreichen Authentifizierung einen Unterschritt (E11₁) des Erhaltens des Renderings des zweiten Motivs durch den Client durch Lesen in einem zweiten Speicher der Serverausrüstung umfasst.

3. Authentifizierungsverfahren nach Anspruch **1, dadurch gekennzeichnet, dass** der Aktualisierungsschritt (E11) infolge der erfolgreichen Authentifizierung einen Unterschritt (E11₁') des Erhaltens des Renderings des zweiten Motivs durch den Client durch Senden des Renderingausführungsbefehls (SC1₂) des zweiten Motivs und Empfangens einer Antwort umfasst, die ein Rendering des zweiten Motivs durch den Client umfasst.

4. Authentifizierungsverfahren nach einem der vorangehenden Ansprüche, **dadurch gekennzeichnet, dass** der Ausführungsbefehl eines Renderings des ersten oder des zweiten Motivs ein Befehl ist, der zu einer Gruppe gehört, die mindestens umfasst:
- einen Befehl vom Typ "canvas", der bestimmt ist, ein grafisches Motiv in einem rechteckigen Rahmen vorbestimmter Größe zu erzeugen;
- einen Befehl vom Typ Audiokontext, umfassend Beschreibungsparameter eines Audiosignals und bestimmt, ein Audiorendering zu erzeugen;
- einen Befehl vom Typ "getClientRects", der bestimmt ist, eine Vielzahl von Rechtecken zu erzeugen, die den Grenzen von Textzeilen eines HTML-Elements entsprechen.

5. Authentifizierungsverfahren nach Anspruch **1, dadurch gekennzeichnet, dass** infolge einer fehlgeschlagenen Authentifizierung das Verfahren einen Verifizierungsschritt (E13) der Identität des Benutzers umfasst, umfassend das Senden einer zusätzlichen Authentifizierungsanforderung an die identifizierte Endgeräteausrüstung, und, im Fall eines positiven Ergebnisses, ein Erzeugen (E14) neuer Authentifizierungsdaten, die einer zweiten Client-Ausrüstung (ET2) zugeordnet sind, umfassend eine Sendeschritt eines Renderingausführungsbefehls eines dritten Motivs (SC2₁) durch die zweite Client-Ausrüstung, und, nach Empfang des Renderings (R2₁), einen Schritt des Speicherns der Authentifizierungsdaten (ID-CRP2₁), bei dem der Renderingbefehl des dritten Motivs und das Rendering einer Kennung der zweiten Client-Ausrüstung zugeordnet werden.

6. Vorrichtung zur Authentifizierung (100) eines Benutzers einer Endgeräteausrüstung für den Zugriff von einem Clientbrowser der Endgeräteausrüstung auf einen entfernten Dienst, der von einer Serverausrüstung gehostet wird, wobei die Vorrichtung eine Rechenmaschine umfasst, die speziell vorgesehen oder ausgelegt ist, um:
- den Benutzer auf der Basis von Identifikationsinformationen zu authentifizieren;
- im Fall einer erfolgreichen Authentifizierung des Benutzers den Clientbrowser auf der Basis von Authentifizierungsinformationen (ID-CRP1₁) zu authentifizieren, die in einem ersten Speicher der Serverausrüstung in Kombination mit den Identifikationsinformationen des Benutzers gespeichert sind, umfassend einen Renderingausführungsbefehl eines ersten Motivs, wobei der Befehl Beschreibungsparameter des ersten Motivs umfasst, deren Werte zufällig aus einer Vielzahl vorbestimmter Werte ausgewählt sind, und ein Rendering des ersten vom Client empfangenen Motivs, bezeichnet als Referenzmotiv, wobei die Authentifizierung umfasst:
∘ einen Versand des Renderingausführungsbefehls des ersten Motivs an die Client-Ausrüstung;
∘ bei Empfang einer Antwort, die ein Rendering des ersten Motivs durch die Client-Ausrüstung umfasst, einen Vergleich (E9) mit dem Referenzrendering und eine Evaluierung eines Übereinstimmungsscores;
∘ wobei eine erfolgreiche Authentifizierung entschieden wird, wenn der Übereinstimmungsscore über einem vorher festgelegten Grenzwert liegt;
**dadurch gekennzeichnet, dass** infolge der Authentifizierungsentscheidung die Rechenmaschine ausgelegt ist, um Authentifizierungsinformationen des Clientbrowsers der Endgeräteausrüstung infolge einer fehlgeschlagenen Authentifizierung durch Unterdrückung des Renderingausführungsbefehls des ersten Motivs und des Renderings des ersten Motivs des ersten Speichers und im Fall einer erfolgreichen Authentifizierung der Client-Ausrüstung durch Ersetzung des im ersten Speicher gespeicherten Renderingbefehls des ersten Motivs und des Referenzrenderings durch einen Renderingausführungsbefehl eines zweiten Motivs, das sich vom ersten unterscheidet, und ein Rendering des zweiten Motivs zu aktualisieren.

7. Serverausrüstung (S), umfassend ein Sende-/Empfangsmodul (E/R) zu und von einem Telekommunikationsnetz (RT), ein Verarbeitungsmodul (TS), das imstande ist, einen entfernten Dienst (Sv) auszuführen, **dadurch gekennzeichnet, dass** sie ferner eine Vorrichtung (100) zur Authentifizierung eines Benutzers einer Endgeräteausrüstung (ET1), der auf den Dienst zugreifen möchte, nach Anspruch **6** umfasst.

8. Rechnerprogramm (Pg1), aufweisend Anweisungen für die Durchführung des Authentifizierungsverfahrens nach einem der Ansprüche **1 bis 5,** wenn das Programme von einem Prozessor ausgeführt wird.

## Claims

1. A method for authenticating a user of a terminal equipment (ET1, ET2) connected to a communication network (RT), for access from this terminal equipment to a remote service (Sv) hosted by a server equipment (S) connected to said network, said method comprising the following steps, intended to be implemented by the server equipment:
- authentication (E0, E1, E2) of the user from credentials;
- in the event of successful user authentication, authenticating the client equipment from credentials (ID-CRP1₁) stored in a first memory of the server equipment in association with the user's credentials, including a command to render a first pattern whose values are randomly selected from a plurality of predetermined values, said command (SC1₁) comprising parameters describing the first pattern, whose values are selected randomly among a plurality of predetermined values, and rendering (R1₁) the first pattern received from the client equipment, so-called reference pattern, said authentication comprising the following substeps:
∘ sending (E7) to the client equipment the first pattern rendering execution command;
∘ upon receipt (E8) of a response comprising a rendering of the first pattern by the client equipment, comparing (E9) with the reference rendering and evaluating a match score;
- deciding (E10) on authenticating the client equipment according to the evaluated score, a successful authentication being decided when the match score is greater than a predetermined threshold;
**characterised in that**, following the authentication decision, the method comprises a step (E11, E12) of updating the credentials of the terminal equipment, said step comprising, following a failed authentication, deleting the execution command of rendering of the first pattern and the rendering of the first pattern of the first memory and, in the event of successful authentication of the client equipment, replacing the rendering command of the first pattern and the reference rendering stored in the first memory, with a execution command of rendering of a second pattern, distinct from the first pattern and a second pattern rendering.

2. The authentication method according to claim 1, **characterised in that** the updating step (E11) comprises, in case of successful authentication, a sub-step (E11₁) for obtaining the rendering of the second pattern by the client by reading a second memory of the server equipment.

3. The authentication method according to claim 1, **characterised in that** the updating step (E11) comprises following the successful authentication, a sub-step (E11₁') of obtaining the second rendering by the client by transmission of the rendering execution command (SC1₂) of the second pattern, and receiving a response comprising a rendering of the second pattern by the client.

4. The authentication method according to one of the preceding claims, **characterised in that** the command to execute a first or second pattern rendering is a command belonging to a group comprising at least:
- a "canvas" type command for producing a graphic pattern in a rectangular frame of a predetermined size;
- an audio context type command comprising parameters for describing an audio signal and for generating an audio rendering.
- A "getClientRects" type command, for generating a plurality of rectangles corresponding to the text line boundaries of an HTML element.

5. The authentication method according to claim 1, **characterised in that**, following a failed authentication, the method comprises a step (E13) for verifying the identity of the user comprising issuing an authentication request to the identified terminal equipment, and that, in case of a positive result, creating (E14) new authentication data associated with a second client equipment (ET2), comprising a transmission step of a rendering execution command of a third pattern (SC2₁) by the second client equipment and upon receipt of the rendering (R2₁), a step of storing authentication data (ID-CRP2₁), associating with an identifier of the second client equipment said third pattern rendering command and said rendering.

6. A device (100) for authenticating the user of a terminal equipment for access from a client browser of the terminal equipment to a remote service hosted by a server equipment, said device comprising a calculation machine dedicated or configured to:
- authenticate the user from credentials;
- in the event of successful user authentication, authenticating the client equipment from credentials stored in a first memory of the server equipment in association with the user's credentials, comprising a command to render a first pattern whose values are randomly selected from a plurality of predetermined values, said command comprising parameters describing the first pattern, and rendering the first pattern received from the client equipment, so-called reference pattern, said authentication comprising:
∘ sending to the client equipment the first pattern rendering execution command;
∘ upon receipt of a response including a rendering of the first pattern by the client equipment, comparing with the reference rendering and evaluating a match score;
∘ deciding on successful authentication when the match score is greater than a predetermined threshold;
**characterised in that,** following the authentication decision , the calculation machine is configured for updating the credentials of the client browser of the terminal equipment, deleting, following an unsuccessful authentication, the rendering execution command of the first pattern and the rendering of first pattern of the first memory and, upon successful authentication of the client equipment, by replacing the rendering command of the first pattern and the reference rendering stored in the first memory, with a rendering execution command of a second pattern, distinct from the first, and a second pattern rendering.

7. A server equipment (S), comprising a transmission/reception module (E/R) to and from a telecommunications network (RT), a processing module (TS) capable of executing a remote service (Sv), **characterised in that** it further comprises a device (100) for authenticating a user of a terminal equipment (ET1) wishing to access the service, according to claim 6.

8. A computer program (Pg1) comprising instructions for implementing the authentication method according to any one of claims 1 to 5, when said program is executed by a processor.
